# FASCICULE DE BREVET EUROPEEN

(11) **EP 1 871 666 B1**
(45) Date de publication et mention de la délivrance du brevet: **27.06.2012**
(21) Numéro de dépôt: 06743674.1
(22) Date de dépôt: 11.04.2006
(51) Int. Cl.: B64D 27/20

(54) **AERONEF A FAIBLE BRUIT, NOTAMMENT LORS DES DECOLLAGES ET DES ATTERRISSAGES.**
INSBESONDERE BEIM START UND BEI DER LANDUNG GERÄUSCHARMES FLUGZEUG
LOW-NOISE AIRCRAFT, PARTICULARLY AT TAKE-OFF AND LANDING

(30) Priorité: 13.04.2005 FR 0503666
(43) Date de publication de la demande: 02.01.2008
(73) Titulaire: AIRBUS OPERATIONS (SAS), 31060 Toulouse (FR)
(72) Inventeur: CROS, Christophe, F-31240 L'Union (FR)
(74) Mandataire: Hauer, Bernard
(86) Numéro de dépôt international: PCT/FR2006/000794
(87) Numéro de publication internationale: WO 2006/108957

(56) Documents cités:
- EP-A- 0 273 466
- EP-A- 1 041 000
- US-A- 3 936 017
- US-A- 4 674 712
- STEINKE S: "AUS DER TRICKKISTE DER FLUGZEUGENTWICKLER AIRBUS-KONZEPTE FUER UEBERMORGEN" FLUG REVUE, STUTTGART, DE, vol. 1/2001, janvier 2001 (2001-01), pages 22-25, XP009053625

## Description

La présente invention concerne un aéronef à faible bruit, notamment lors des décollages et des atterrissages.

Par exemple par le document US-A-3 936 017 ou "AUS DER TRICKKISTE DER FLUGZEUGENTWICKLER AIRBUS-KONZEPTE FUER UEBERMORGEN", Steinke S.,FLUG REVUE, STUTTGART, DE, vol. 1/2001, janvier 2001 (2001-01), pages 22.25, on connaît déjà un aéronef comportant :
- un fuselage ;
- deux ailes disposées latéralement par rapport audit fuselage et ne portant aucun moteur ;
- un empennage vertical arrière constitué d'au moins deux dérives et formant, avec la partie arrière dudit fuselage, un canal disposé sur le dos de celui-ci ; et
- au moins un turbomoteur disposé sur le dos dudit fuselage de façon que les flux de gaz engendrés par ledit turbomoteur pénètrent dans ledit canal.

Ainsi, grâce à la conception des empennages arrière sous la forme d'un canal et à l'agencement des turbomoteurs à l'entrée du canal, on peut réduire considérablement les émissions sonores, puisque le bruit engendré par les turbomoteurs est aspiré par le canal et s'évacue le long de celui-ci, vers le haut loin du fuselage, c'est-à-dire loin des passagers situés à l'arrière de la cabine de l'aéronef et a fortiori des riverains des aéroports. Le bruit engendré est ainsi masqué par les empennages arrière du fuselage qui constituent un écran acoustique.

L'objet de la présente invention est de perfectionner l'aéronef mentionné ci-dessus, afin de réduire encore plus le bruit engendré par lesdits turbomoteurs, principalement lors des décollages et des atterrissages.

A cette fin, selon l'invention, l'aéronef du type rappelé ci-dessus est remarquable en ce que :
- le train d'atterrissage principal dudit aéronef est disposé intégralement sous le fuselage ;
- lesdites ailes présentent une faible flèche au plus égale à 10°;
- lesdites ailes présentent un grand allongement au moins égal à 10.

Ainsi, selon l'invention, les ailes dudit aéronef non seulement ne portent aucun moteur, mais encore n'ont pas à supporter au moins une partie du train d'atterrissage. Il en résulte qu'il devient possible d'optimiser les caractéristiques aérodynamiques desdites ailes :
- en réduisant leur flèche, ce qui augmente la portance maximale de l'aéronef, et donc les performances, à basse vitesse ; et
- en augmentant l'allongement des ailes (qui est le rapport de l'envergure d'une aile au carré de la surface de cette aile), ce qui leur communique une grande finesse.

Ainsi, l'aéronef présente d'excellentes performances au décollage (il monte plus vite) et à l'atterrissage (il atterrit plus lentement), de sorte que le bruit engendré au décollage et à l'atterrissage est encore fortement réduit.

Ladite flèche est au plus égale à 10° et ledit allongement est au moins égal à 10.

Les figures du dessin annexé feront bien comprendre comment l'invention peut être réalisée. Sur ces figures, des références identiques désignent des éléments semblables.
La figure 1 est une vue en perspective, de l'avant et du dessus, d'un avion conforme à la présente invention.
La figure 2 est une vue en plan de l'avion de la figure 1.

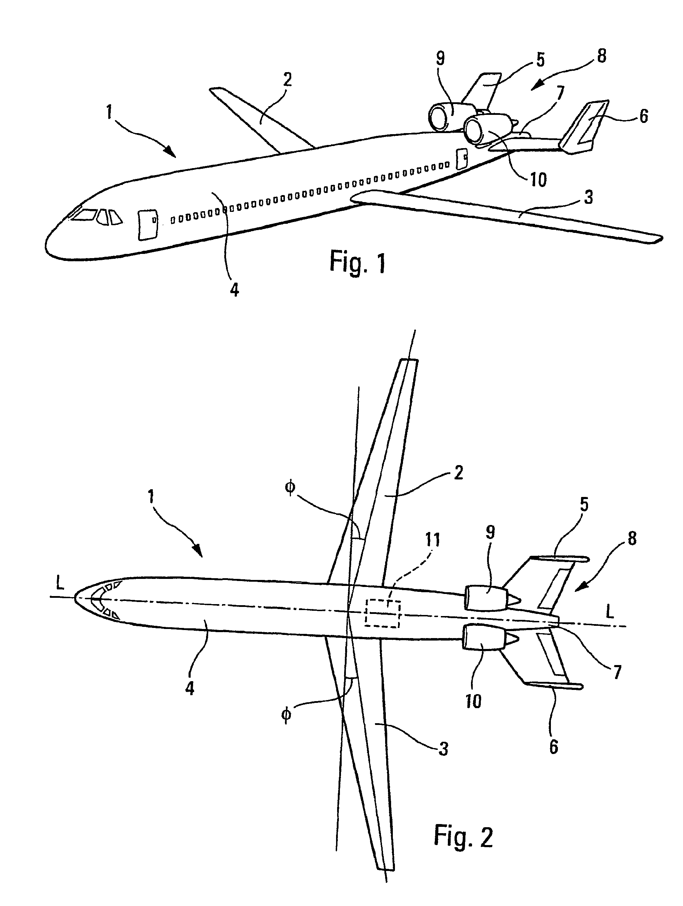

L'avion 1, montré schématiquement par les figures 1 et 2 et conforme à la présente invention, comporte deux ailes 2 et 3 disposées, latéralement et symétriquement, par rapport au fuselage 4, d'axe longitudinal L-L.

L'empennage vertical arrière de l'avion 1 comporte deux dérives 5 et 6 formant, avec la partie arrière 7 du fuselage 4, un canal 8, disposé sur le dos dudit avion. Le canal 8 est ouvert vers le haut, mais fermé vers le bas (par ladite partie arrière 7) et latéralement (par les dérives 5 et 6).

Deux turbomoteurs 9 et 10 sont portés par le dos du fuselage 4 et sont disposés de façon que les flux de gaz engendrés par lesdits turbomoteurs pénètrent dans ledit canal 8. Ainsi, celui-ci sert d'écran acoustique, ce qui réduit vers le bas et latéralement, le bruit engendré par les turbomoteurs 9 et 10.

Le train d'atterrissage (non représenté) de l'avion 1 est disposé intégralement sous le fuselage 4 et, à l'état replié, il est logé dans une case 11, ménagée dans la partie inférieure dudit fuselage.

De plus, les ailes 2 et 3 présentent une faible flèche φ, par exemple au plus égale à 10°, et un grand allongement (rapport entre l'envergure d'une aile et le carré de la surface de cette aile), par exemple au moins égal à 10.

Ainsi, grâce à l'invention, l'avion 1 peut décoller rapidement et atterrir lentement, ce qui réduit encore le bruit perçu par des personnes se trouvant au voisinage dudit avion, lors de ses décollages et de ses atterrissages.

## Revendications

1. Aéronef comportant :
- un fuselage (4) ;
- deux ailes (2, 3) disposées latéralement par rapport audit fuselage (4) et ne portant aucun moteur ;
- un empennage vertical arrière constitué d'au moins deux dérives (5, 6) et formant, avec la partie arrière (7) dudit fuselage (4), un canal (8) disposé sur le dos de celui-ci ; et
- au moins un turbomoteur (9, 10) disposé sur le dos dudit fuselage (4) de façon que les flux de gaz engendrés par ledit turbomoteur (9, 10) pénètrent dans ledit canal (8),
**caractérisé en ce qu'**il comporte la combinaison des particularités suivantes :
- le train d'atterrissage principal dudit aéronef est disposé intégralement sous le fuselage (en 11) ;
- lesdites ailes (2, 3) présentent une faible flèche (φ) au plus égale à 10° ; et
- lesdites ailes présentent un grand allongement au moins égal à 10.

## Claims

1. An aircraft comprising:
- a fuselage (4);
- two wings (2, 3) arranged laterally with respect to said fuselage (4) and not carrying any engines;
- a rear vertical tail section consisting of at least two fins (5, 6) and forming, with the rear portion (7) of said fuselage (4), a channel (8) arranged on the back thereof; and
- at least one turbine engine (9, 10) arranged on the back of said fuselage (4) such that the gas streams generated by said turbine engine (9, 10) enter said channel (8),
**characterized in that** it comprises the combination of the following features:
- the main landing gear of said aircraft is arranged entirely below the fuselage (at 11);
- said wings (2, 3) have a small sweep angle (ϕ) at most equal to 10°; and
- said wings have a high aspect ratio at least equal to 10.

## Patentansprüche

1. Luftfahrzeug, das aufweist:
- einen Rumpf (4),
- zwei Flügel (2, 3), die seitlich im Verhältnis zum Rumpf (4) angeordnet sind und keinen Motor tragen,
- ein hinteres vertikales Leitwerk, das aus mindestens zwei Schwertern (5, 6) besteht und mit den hinteren Abschnitt (7) des Rumpfs (4) einen Kanal (8) bildet, der auf dem Rücken desselben angeordnet ist, und
- mindestens einen Turbomotor (9, 10), der derart auf dem Rücken des Rumpfes (4) angeordnet ist, dass die Gasströme, die von dem Turbomotor (9, 10) erzeugt werden, in den Kanal (8) eintreten,
**dadurch gekennzeichnet, dass** es die Kombination der folgenden Besonderheiten aufweist:
- das Hauptfahrwerk des Luftfahrzeugs ist vollständig unter dem Rumpf (an 11) angeordnet,
- die Flügel (2, 3) bilden eine geringe Pfeilung (φ) von höchstens gleich 10°, und
- die Flügel weisen eine große Streckung von mindestens gleich 10 auf.
